# EUROPEAN PATENT APPLICATION

(11) **EP 4 641 971 A1**
(43) Date of publication of application: **29.10.2025**
(21) Application number: 24171680.2
(22) Date of filing: 22.04.2024
(51) Int. Cl.: H04L 9/32, H04L 9/40, H04L 9/08, G06F 7/58

(54) **SYSTEM AND METHOD FOR DELIVERING QUANTUM RANDOM NUMBERS**

(71) Applicant: Deutsche Telekom AG, 53113 Bonn (DE)
(72) Inventor: YIN, Ming, 16341 Panketal (DE); KIM, Ju Hoon, 14947 Nuthe-Urstromtal (DE)
(74) Representative: RDL Patentanwälte PartG mbB

(57) **Abstract**

A system for delivering quantum random numbers, QRNs, supplied by QRN generators, QRNGs, configured for generating QRNs and supplying the generated QRNs, a method for delivering QRNs and a computer program product.

## Description

The invention relates to a system for delivering quantum random numbers, QRNs, supplied by a QRN generator, QRNG, configured for generating QRNs and supplying the generated QRNs. The invention further relates to a method for delivering QRNs and to a computer program product.

There are different systems in the state of the art for generating random numbers and providing the generated random numbers to consumers using the provided random numbers, e.g., for cryptography, statistics, numerical simulations, artificial neural networks, scientific research and the like.

Random numbers may be pseudo random numbers, PRNs, or quantum random numbers, QRNs. While the former ones are generated deterministically and only appear to be random numbers, the latter ones are generated by so-called QRN generators, QRNG, relying on quantum mechanical principles and, hence, are considered to be true random numbers. A QRNG may simulate quantum mechanical states like Python atomic simulation environment, ASE, or use physical quantum mechanical states like photons or the vacuum, the respective quantum mechanical states behaving statistically according to quantum theory.

Exemplary QRNGs are Quantis, ComScire, Toshiba, PQRNG150, Entropy engine, qStream, QNG2, MQRNG, quRNG, MPD QNRG, QRNG100E, Quside FMC 400 to name only a few.

Each QRN comprises a sequence of bits wherein each bit is derived from a qubit, i.e., a quantum theoretical bit. As the sequence of bits is considered to be truly random, QRNs may be referred to as a quantum entropy.

Herein, a provider of QRNs, i.e., an operator of a QRNG is referred to as a QRN supplier. Correspondingly, a consumer using QRNs is referred to as a QRN consumer herein. The QRN consumer may be any application requiring QRNs.

Each QRN consumer is required to find and select an adequate QRNG. Both finding QRNGs and selecting from found QRNGs is not an easy task. Selecting the adequate QRNG necessarily comprises comparing different QRNGs regarding a randomness, i.e., a quality of the supplied QRNs, a noise sphere of the QRNG algorithm and the like.

On the other hand, each QRN supplier is highly interested in promoting the supplied QRNs and finding QRN consumers to subscribe for retrieving the supplied QRNs as supplying QRNs is an elaborate and expensive service.

It is, therefore, an object of the invention to provide a system for delivering QRNs which facilitates distributing QRNs, i.e., a quantum entropy. Further objects of the invention are to suggest a method for delivering QRNs and to provide a computer program product.

An aspect of the invention is a system for delivering quantum random numbers, QRNs, generated by a QRN generator, QRNG, configured for generating QRNs and supplying the generated QRNs. The system is configured for delivering QRNs supplied by the QRNG to a QRN consumer. The QRNG shall be generally understood to be an entropy supplier. The QRN consumer shall be generally understood to be an entropy consumer.

According to the invention, the system comprises a QRN supply interface to be connected to by the QRNG for supplying QRNs to the system, a QRN delivery interface to be connected to by a QRN consumer for retrieving QRNs delivered by the system and a QRN brokering module for forwarding the supplied QRNs to the QRN delivery interface. The QRN supply interface is configured for being connected to by a plurality of different QRNGs, i.e., to match different supply interfaces of different QRNGs. The QRN supply interface is further configured for allowing each QRNG to register with the system.

The QRN delivery interface is configured for being connected to by a plurality of different QRN consumers and hides differences between supply interfaces of different QRNGs from the QRN consumer. The QRN delivery interface is further configured for allowing each QRN consumer to access each connected QRNG, select an adequate QRNG from the connected QRNGs and subscribing to retrieving QRNs supplied by the selected QRNG.

The QRN brokering module is configured for routing each QRN from a supplier side of the system to a consumer side of the system. The system allows for seamlessly integrating a plurality of different QRNGs and a plurality of different QRN consumers and facilitates distributing QRNs, i.e., a quantum entropy. The system may be considered as a one-stop shop or marketplace reducing an effort for searching QRNGs, providing information concerning each QRNG, i.e., concerning a quality, a rate, a price and the like of the QRNs supplied by the QRNG, increasing a probability of finding an adequate QRNG, and reducing an effort for retrieving the QRNs.

The QRN supply interface may comprise a QRN request interface for supplying the QRNs upon a request of the system and/or a QRN stream interface for supplying the QRNs as a stream. The QRN request interface allows the system for pulling a QRN. The QRN stream interface allows the QRNG for pushing a QRN. Of course, each QRNG may connect to either or both of the interfaces.

Preferably, the QRN delivery interface is configured as a RESTful web service API and/or secured by a post quantum cryptography, PQC. The RESTful web service API allows a representational state transfer, REST, for web services. A security provided by PQC is considered to be resistant against a cryptographic attack of quantum computers.

In an embodiment, the system comprises a QRN testing module for assessing a randomness of the supplied QRNs. The QRN testing module allows the QRN consumer for checking a quality of the supplied entropy.

Alternatively or additionally, the system comprises a QRN certification module for certificating a randomness of the supplied QRNs. The QRN certification module allows the QRN consumer for trusting a certified randomness of the supplied QRNs without checking the randomness. Of course, each certificate is exclusively assigned to a QRNG.

Still alternatively or additionally, the system comprises a QRN processing module for post-processing the supplied QRNs. The post-processing may comprise an entropy amplification, an entropy merging and the like.

The system advantageously comprises an evaluation module for monitoring the system. The evaluation module is configured for monitoring an operation of the system and generates, e.g., usage statistics.

In a preferred embodiment, the system comprises a user management module for handling the QRNG and the QRN consumer. Herein, both the QRNG and the QRN consumer are users of the system. The user management module is configured for managing corresponding user profiles, checking an authenticity and an authorization of each user, and accounting the costs of usage.

Another aspect of the invention is a QRN delivery structure for delivering quantum random numbers, QRNs.

According to the invention, the QRN delivery structure comprises a system according to an embodiment of the invention, at least one QRN generator, QRNG, connected to the QRN supply interface of the system and at least one QRN consumer connected to the QRN delivery interface of the system. The QRN delivery structure may comprise a plurality of QRNGs and/or a plurality of QRN consumers. The QRN delivery structure seamlessly integrates different QRNGs and different QRN consumers and, thus, facilitates distributing QRNs, i.e., a quantum entropy, within a plurality of users.

A third aspect of the invention is a method for delivering quantum random numbers, QRNs, wherein a QRN generator, QRNG, generates QRNs and supplies the generated QRNs to the system via the QRN supply interface. The supplied QRNs are true random numbers and may be referred to as an entropy.

According to the invention, the QRNG is connected to a QRN supply interface of a system, a QRN brokering module of the system forwards the supplied QRNs from the QRN supply interface to a QRN delivery interface of the system and a QRN consumer connected to the QRN delivery interface retrieves QRNs delivered by the system via the QRN delivery interface. A plurality of QRNGs and a plurality of QRN consumers, respectively, may be connected to the system. The QRN brokering module routes QRNs supplied by a QRNG to a consumer retrieving the supplied QRNs. In other words, the QRN brokering module ensures each QRN consumer to retrieve exactly the QRNs supplied by QRNGs selected by the QRN consumer.

The QRNs may be supplied upon a request of the system and/or as a stream. Supplying the QRNs upon a request means pulling the QRNs. Supplying the QRNs as a stream means successively pushing the QRNs.

Preferably, a QRN testing module of the system assesses a randomness of the supplied QRNs. The QRN testing module allows the QRN consumer for checking a quality of the supplied entropy.

A QRN certification module of the system may certify a randomness of the supplied QRNs. The QRN certification module allows the QRN consumer for trusting a certified randomness of the supplied QRNs without checking the randomness. Of course, each certificate is exclusively assigned to a QRNG.

In a preferred embodiment, a plurality of QRNGs connected to the system supplies QRNs and/or a plurality of QRN consumers connected to the system retrieves QRNs upon respective subscriptions. Each QRN consumer has access to each QRNG. Each QRNG is enabled to supply QRNs to each QRN consumer.

Advantageously, the QRNs are delivered as a service provided by a communication network. The service may be called "entropy as a service", EaaS for short. The service can be easily accessed by each user of the communication network. The communication network may be configured as a radio access network, RAN.

A fourth aspect of the invention is a computer program product, comprising a digital storage medium storing a program code. The digital storage medium comprises a compact disc, CD, a digital versatile disk, DVD, a universal serial bus, USB, stick, a random access memory, RAM, chip, a hard drive, HD, a cloud storage and the like.

According to the invention, the program code causes a computing device to carry out a method according to the invention as the system when being executed by a processor of the computing device. The computing device allows for seamlessly integrating QRNGs and QRN consumers and facilitates distributing QRNs, i.e., a quantum entropy.

It is an essential advantage of the inventive system that it seamlessly integrates QRNGs and QRN consumers and facilitates distributing QRNs, i.e., a quantum entropy.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a quantum random number, QRN, delivery structure according to an embodiment of the invention for delivering QRNs;
- Fig. 2: schematically shows a multi-domain use case of the QRN delivery structure shown in fig. 1.

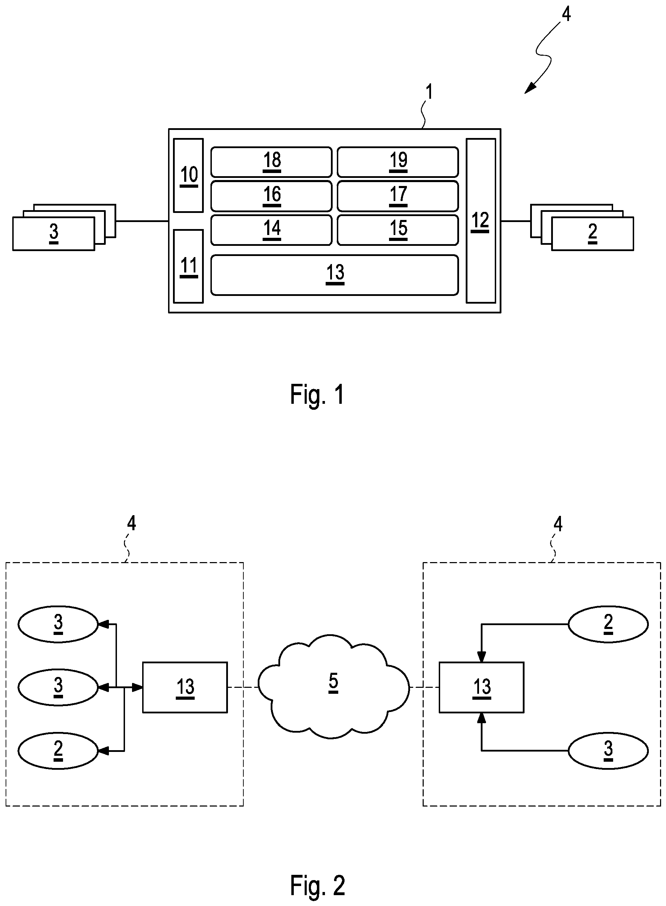

Fig. 1 schematically shows a quantum random number, QRN, delivery structure 4 according to an embodiment of the invention for delivering QRNs. The QRN delivery structure 4 comprises a system 1 according to the invention for delivering QRNs.

The system 1 comprises a QRN supply interface 10, 11 to be connected to by a QRN generator, QRNG, 3 configured for generating QRNs and supplying the generated QRNs. The QRN supply interface 10, 11 may comprise a QRN request interface 10 for supplying the QRNs upon a request of the system 1 and/or a QRN stream interface 11 for supplying the QRNs as a stream.

The system 1 further comprises a QRN delivery interface 12 to be connected to by a QRN consumer 2 for retrieving QRNs delivered by the system 1.

The system 1 further comprises a QRN brokering module 13 for forwarding the supplied QRNs from the QRN supply interface 10, 11 to the QRN delivery interface 12. The QRN delivery interface 12 may be configured as a RESTful web service API and/or secured by a post quantum cryptography, PQC.

The system 1 may further comprise a QRN testing module 14 for assessing a randomness of the supplied QRNs, a QRN certification module 15 for certificating a randomness of the supplied QRNs and/or a QRN processing module 16 for post-processing the supplied QRNs.

The system 1 preferably comprises an evaluation module 17 for monitoring the system 1 and/or a user management module 18 for handling the QRNG 3 and the QRN consumer 2. The system 1 may further comprise a database 19 for permanently storing data, e.g., provided by the QRN testing module 14, the QRN certification module 15, the evaluation module 17 and/or the user management module 18.

The system 1 may be implemented by means of a computer program product. The computer program product comprises a digital storage medium storing a program code. The program code causes a computing device to carry out a method according to an embodiment of the invention as the system 1 as follows when being executed by a processor of the computing device.

The QRN delivery structure 4 further comprises at least one QRN generator, QRNG, 3 connected to the QRN supply interface 10, 11 of the system 1 and at least one QRN consumer 2 connected to a QRN delivery interface 12 of the system 1. Preferably, the QRN delivery structure 4 comprises respective pluralities of QRNGs 3 and QRN consumers 2.

For delivering QRNs, the QRN delivery structure 4 carries out the following method.

The QRNG 3 connected to the QRN supply interface 10, 11 of the system 1, generates QRNs and supplies the generated QRNs to the system 1 via the QRN supply interface 10, 11. The QRNs may be supplied upon a request via the QRN request interface 10 and/or as a stream.

The QRN brokering module 13 of the system 1 forwards the supplied QRNs from the QRN supply interface 10, 11 to the QRN delivery interface 12.

The QRN consumer 2 connected to the QRN delivery interface 12 of the system 1 retrieves QRNs delivered by the system 1 via the QRN delivery interface 12.

Preferably, a plurality of QRNGs 3 connected to the system 1 supplies QRNs, and/or a plurality of QRN consumers 2 connected to the system 1 retrieves QRNs upon respective subscriptions.

The QRN testing module 14 of the system 1 may assess a randomness of the supplied QRNs. The QRN certification module 15 of the system 1 may certify a randomness of the supplied QRNs.

The QRNs are preferably delivered as a service provided by a communication network.

Fig. 2 schematically shows a multi-domain use case of the QRN delivery structure shown in fig. 1. The multi-domain use case comprises two QRN delivery structures 4, i.e., a first QRN delivery structure of a first domain and a second delivery structure of a second domain different from the first domain, and a communication network 5.

The respective QRN brokering modules 13 are connected to each other via the communication network 5 linking the first domain and the second domain. The connected QRN delivery structures 4 allow each QRN consumer 2 for retrieving QRNs supplied by each QRNG 3 independent of the respective domains.

### Reference Numerals

- 1: system
- 10: QRN request interface, QRN supply interface
- 11: QRN stream interface, QRN supply interface
- 12: QRN delivery interface
- 13: QRN brokering module
- 14: QRN testing module
- 15: QRN certification module
- 16: QRN processing module
- 17: evaluation module
- 18: user management module
- 19: database
- 2: QRN consumer
- 3: QRNG
- 4: QRN delivery structure
- 5: communication network

## Claims

1. A system (1) for delivering quantum random numbers, QRNs, comprising
- a QRN supply interface (10, 11) to be connected to by a QRN generator, QRNG, (3) configured for generating QRNs and supplying the generated QRNs;
- a QRN delivery interface (12) to be connected to by a QRN consumer (2) for retrieving QRNs delivered by the system (1);
- a QRN brokering module (13) for forwarding the supplied QRNs from the QRN supply interface (10, 11) to the QRN delivery interface (12) ;

2. The system according to claim 1, wherein the QRN supply interface (10, 11) comprises a QRN request interface (10) for supplying the QRNs upon a request of the system (1) and/or a QRN stream interface (11) for supplying the QRNs as a stream.

3. The system according to claim 1 or 2, wherein the QRN delivery interface (12) is configured as a RESTful web service API and/or secured by a post quantum cryptography, PQC.

4. The system according to one of claims 1 to 3, comprising a QRN testing module (14) for assessing a randomness of the supplied QRNs.

5. The system according to one of claims 1 to 4, comprising a QRN certification module (15) for certificating a randomness of the supplied QRNs.

6. The system according to one of claims 1 to 5, comprising a QRN processing module (16) for post-processing the supplied QRNs.

7. The system according to one of claims 1 to 6, comprising an evaluation module (17) for monitoring the system (1) and/or a user management module (18) for handling the QRNG (3) and the QRN consumer (2).

8. A QRN delivery structure (4) for delivering quantum random numbers, QRNs, comprising a system (1) according to one of claims 1 to 7, at least one QRN generator, QRNG, (3) connected to the QRN supply interface (10, 11) of the system (1) and at least one QRN consumer (4) connected to the QRN delivery interface (12) of the system (1).

9. A method for delivering QRNs, wherein
- a QRN generator, QRNG, (3) connected to a QRN supply interface (10, 11) of a system (1) generates QRNs and supplies the generated QRNs to the system (1) via the QRN supply interface (10, 11);
- a QRN consumer (2) connected to a QRN delivery interface (12) of the system (1) retrieves QRNs delivered by the system (1) via the QRN delivery interface (12);
- a QRN brokering module (13) of the system (1) forwards the supplied QRNs from the QRN supply interface (10, 11) to the QRN delivery interface (12) .

10. The method according to claim 9, wherein the QRNs are supplied upon a request of the system 1 and/or as a stream.

11. The method according to claim 9 or 10, wherein a QRN testing module (14) of the system (1) assesses a randomness of the supplied QRNs.

12. The method according to one of claims 9 to 11, wherein a QRN certification module (15) of the system (1) certifies a randomness of the supplied QRNs.

13. The method according to one of claims 9 to 12, wherein a plurality of QRNGs (3) connected to the system (1) supplies QRNs and/or a plurality of QRN consumers (2) connected to the system (1) retrieves QRNs upon respective subscriptions.

14. The method according to one of claims 9 to 13, wherein the QRNs are delivered as a service provided by a communication network.

15. A computer program product, comprising a digital storage medium storing a program code, the program code causing a computing device to carry out the method according to one of claims 9 to 14 as the system (1) when being executed by a processor of the computing device.

## Amended claims

### Amended claims in accordance with Rule 137(2) EPC.

1. A system (1) for delivering quantum random numbers, QRNs, comprising
- a QRN supply interface (10, 11) connectable to a QRN generator, QRNG, (3) configured for generating QRNs and supplying the generated QRNs;
- a QRN delivery interface (12) connectable to a QRN consumer (2) for retrieving QRNs delivered by the system (1);
- a QRN processing module (16) for post-processing the supplied QRNs, the post-processing comprising an entropy amplification and/or an entropy merging;
- a QRN brokering module (13) for forwarding the supplied QRNs from the QRN supply interface (10, 11) to the QRN delivery interface (12) ;

2. The system according to claim 1, wherein the QRN supply interface (10, 11) comprises a QRN request interface (10) for supplying the QRNs upon a request of the system (1) and/or a QRN stream interface (11) for supplying the QRNs as a stream.

3. The system according to claim 1 or 2, wherein the QRN delivery interface (12) is configured as a RESTful web service API and/or secured by a post quantum cryptography, PQC.

4. The system according to one of claims 1 to 3, comprising a QRN testing module (14) for assessing a randomness of the supplied QRNs.

5. The system according to one of claims 1 to 2, comprising a QRN certification module (15) for certificating a randomness of the supplied QRNs.

6. The system according to one of claims 1 to 5, comprising an evaluation module (17) for monitoring the system (1) and/or a user management module (18) for handling the QRNG (3) and the QRN consumer (2).

7. A QRN delivery structure (4) for delivering quantum random numbers, QRNs, comprising a system (1) according to one of claims 1 to 6, at least one QRN generator, QRNG, (3) connected to the QRN supply interface (10, 11) of the system (1) and at least one QRN consumer (4) connected to the QRN delivery interface (12) of the system (1).

8. A method for delivering quantum random numbers, QRNs, wherein
- a QRN generator, QRNG, (3) connected to a QRN supply interface (10, 11) of a system (1) generates QRNs and supplies the generated QRNs to the system (1) via the QRN supply interface (10, 11);
- a QRN consumer (2) connected to a QRN delivery interface (12) of the system (1) retrieves QRNs delivered by the system (1) via the QRN delivery interface (12);
- a QRN processing module (16) post-processes the supplied QRNs;
- a QRN brokering module (13) of the system (1) forwards the supplied QRNs from the QRN supply interface (10, 11) to the QRN delivery interface (12) .

9. The method according to claim 8, wherein the QRNs are supplied upon a request of the system (1) and/or as a stream.

10. The method according to claim 8 or 9, wherein a QRN testing module (14) of the system (1) assesses a randomness of the supplied QRNs.

11. The method according to one of claims 8 to 10, wherein a QRN certification module (15) of the system (1) certifies a randomness of the supplied QRNs.

12. The method according to one of claims 8 to 11, wherein a plurality of QRNGs (3) connected to the system (1) supplies QRNs and/or a plurality of QRN consumers (2) connected to the system (1) retrieves QRNs upon respective subscriptions.

13. The method according to one of claims 8 to 12, wherein the QRNs are delivered as a service provided by a communication network.

14. A computer program product, comprising a digital storage medium storing a program code, the program code causing a computing device to carry out the method according to one of claims 8 to 13 as the system (1)when being executed by a processor of the computing device.
